## Europäisches Patentamt
## European Patent Office
## Office européen des brevets

(19)

(11) Publication number: **0 021 588**
**B1**

(12) **EUROPEAN PATENT SPECIFICATION**

(45) Date of publication of patent specification: **25.07.84**

(21) Application number: **80301599.9**

(22) Date of filing: **16.05.80**

(51) Int. Cl.³: **B 32 B 31/20, B 44 C 5/04, C 08 G 12/46**

(54) **No overlay decorative laminates coated with melamine-formaldehyde resin and methods for producing the same.**

(30) Priority: **06.06.79 US 46143**
**06.06.79 US 46140**
**06.06.79 US 46141**
**06.06.79 US 46142**
**06.06.79 US 46144**

(43) Date of publication of application:
**07.01.81 Bulletin 81/1**

(45) Publication of the grant of the patent:
**25.07.84 Bulletin 84/30**

(84) Designated Contracting States:
**BE CH DE FR GB IT LI NL SE**

(56) References cited:
**FR - A - 2 330 538**
**GB - A - 855 536**
**US - A - 3 215 583**
**US - A - 3 563 844**

(73) Proprietor: **FORMICA CORPORATION**
**Berdan Avenue**
**Wayne, New Jersey 07470 (US)**

(72) Inventor: **Raghava, Ran Singh**
**1386 King George Blvd**
**Ann Arbor, Michigan (US)**
Inventor: **Zavisza, Daniel Maximillian**
**57 East Oak Street**
**Basking Ridge, New Jersey (US)**
Inventor: **Casey, Donald James**
**9 Revere Place**
**Ridgefield, Connecticut (US)**
Inventor: **West, Winton Wilbur**
**7752 Bitteroot Lane**
**Cincinnati, Ohio (US)**
Inventor: **Richardson, Calvin**
**6804, Leeds Lane West**
**Cincinnati, Ohio 45215 (US)**

(74) Representative: **Allam, Peter Clerk et al,**
**LLOYD WISE, TREGEAR & CO. Norman House**
**105-109 Strand**
**London WC2R 0AE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# O 021 588

**Description**

This invention generally relates to decorative laminates and methods of producing the same. More particularly, this invention relates to high-wear, no-overlay decorative laminates employing a fully hydrolyzed polyvinyl alcohol-modified melamine-formaldehyde resin coating in place of an overlay sheet.

Conventionally, decorative laminates are made of three essential layers: a core layer, a print layer, and a surface layer. The core layer constitutes a bottom or supporting layer onto which the other layers are bonded. In normal high-pressure laminate manufacture the core layer consists of a plurality of cellulosic sheets. The core sheets are generally made from a kraft paper impregnated with a laminating resin. Laminating resins commonly used for the core layer include phenolic, amino, epoxy, polyester, silicone, and diallyl phthalate resins to name but a few. The industrially preferred laminating resin for decorative laminates appears to be a phenolic resin made from the reaction of phenols with formaldehyde. In low-pressure laminate manufacture the core layer is generally comprised of a sheet of particleboard ranging from 9.525—25.4 mm in thickness.

Placed above the core layer is the print layer which is generally an alpha cellulose pigmented paper containing a print, pattern, or design that has been impregnated with a melamine-formaldehyde resin. Typically, the printing is performed prior to impregnation by a high-speed rotogravure.

The cured melamine-formaldehyde resins are colorless and resistant to light; they are resistant to a variety of solvents and stains; and their heat resistance makes them immune to burning cigarettes, boiling water and heated containers up to about 153°C. Without these melamine-formaldehyde resins the decorative laminate industry would not exist as it is known today. However, because these resins are extremely brittle, they sometimes require reinforcement.

The surface layer, or overlay as it is commonly referred to, is a high-quality alpha cellulose paper impregnated with a melamine-formaldehyde resin. This layer protects the print sheet from external abuse such as abrasive wear and tear, harsh chemicals, burns, spills and the like. It is primarily the melamine-formaldehyde resin which accounts for these protective properties. The alpha-cellulose paper acts as a translucent carrier for water-thin resin, imparts strength to the rather brittle melamine formaldehyde resin, maintains a uniform resin thickness in the overlay by acting as a shim, and controls resin flow.

The core layer, print layer and surface layer are stacked in a superimposed relationship, usually between polished steel plates, and subjected to a pressure and temperature for a time sufficiently long enough to cure the laminating resins impregnating the respective layers. The elevated temperatures and pressure actually cause the impregnated resins within the sheets to flow which consolidates the whole into an integral mass, known as the laminate. These laminates find use as counter tops, table tops, furniture, store fixtures and the like.

Employment of the overlay sheet has, however, generated a host of unwanted problems. The overlay contributes substantial material cost to the manufactured laminate. Not only are there raw material costs involved, such as expensive high-quality alpha cellulose paper and melamine-formaldehyde resins, but there exists substantial processing costs, such as collating sheets, scrap losses generated by the brittle and difficult-to-handle impregnated sheets, as well as the cost of impregnation itself. In addition to these unwanted expenditures and processing steps, the translucent character of the overlay sheet becomes visually disturbing in decorative laminates when, through the use of more advance printing techniques, a sharper, more intricate design is employed.

Thus, there exists the need for substitution of the overlay sheet by a tough and transparent thermoset layer that will eliminate haze or blur, incur fewer processing steps and lower costs, and yet maintain sufficient resistance to external abuse to be commercially acceptable. The provision for such a layer would fulfil a long-felt need and constitute a significant advance in the art.

GB—A—855536 discloses a melamine-formaldehydepolyvinyl alcohol resin useful in the laminating arts to produce films having good transparency without the defects of poor craze and poor flex resistance. This resin is the reaction product of melamine, formaldehyde (in certain proportions relative to the melamine) and a polyvinyl alcohol composition containing from 85% to 90% polyvinyl alcohol and, correspondingly, from 15% to 10% of polyvinyl acetate. It is stated that the replacement of such a partially hydrolyzed polyvinyl alcohol by one containing no polyvinyl acetate results in laminates which display poor craze and flex resistance.

The present invention provides for a fully hydrolyzed polyvinyl alcohol (that is, a substantially one hundred percent hydrolyzed polyvinyl alcohol) modified melamine-formaldehyde resin coating to be employed as a substitute for the conventional overlay sheet as the protective surface layer in laminates. The application of this modified thermosetting resin allows for the elimination of the overlay sheet thereby providing substantial processing and cost savings in the manufacture of laminates. In addition, the requirements of the National Electrical Manufacturers Association (hereinafter referred to as NEMA) for high-pressure decorative laminates are still satisfied when this resin is employed. Finally, the transparent nature of this resin provides for a clear and undistorted appearance of the print, pattern or design in the decorative laminate.

In accordance with one aspect of the present invention there is provided a heat-and-pressure

2

consolidated laminate consisting essentially of, in superimposed relationship, a core layer comprised of a self-supporting substrate, a print layer consisting of an opaque alpha cellulose paper sheet, impregnated with a melamine-formaldehyde thermoset resin, and a surface coating of a fully hydrolyzed polyvinyl alcohol (PVA)-modified melamine-formaldehyde resin wherein the surface coating weight is from 60 to 140 grams per square meter and the amount of fully hydrolyzed PVA in the surface coating is from 5 to 30 percent by weight of the total weight of the melamine-formaldehyde reaction product solids.

The polyvinyl alcohol-modified melamine-formaldehyde resin employed as the surface coating in the laminates of the present invention comprises the reaction product of melamine, formaldehyde and fully hydrolyzed polyvinyl alcohol wherein the molar ratio of melamine to formaldehyde is 1:1 to 1:3, respectively, and the hydrolyzed polyvinyl alcohol comprises from 5 to 30 percent by weight of the total weight of the melamine-formaldehyde reaction product solids.

The above-defined heat-and-pressure consolidated laminate of the present invention is produced according to the method which comprises positioning the consolidated laminate assembly between press plates, applying sufficient temperature and pressure to the laminate assembly to cure the resins impregnating the laminate assembly, thereby providing the decorative laminate, and recovering the resultant laminate.

The core layer of the laminate may, for example, contain either a plurality of sheets impregnated with a laminating resin or a commercially available pressed particle-board. In high-pressure laminates, the core layer is typically provided by a plurality of impregnated sheets. These sheets can be varied in their nature in accordance with the particular properties desired in the decorative laminate. Typically, the core layer is made from paper, woven fabrics, mats, felts, or the like. Paper is by far the most widely used and thus constitutes the preferred stock for the core layer in high-pressure laminate. More particularly, a kraft paper of 0.096—0.206 kg/m² (60 to a 130 pound basis weight per 3000 square foot ream) is preferred as the stock from which the core layer sheets are prepared for high-pressure laminates because of its strong, cheap and plentiful nature. In low-pressure laminates, a particleboard of from about 9.525—25.4 mm in thickness is preferred as the self-supporting substrate comprising the core layer. Suitable particleboards are commercially available in plentiful quantities at moderate cost.

The laminating resins used for impregnating the sheets of the core layer can be any of those thermosetting resins conventionally used in the production of laminates. Laminating resins conventionally used include, but are not limited to, phenolic, amino, epoxy, polyester, silicone and diallyl phthalate resins. The most commonly employed laminating resin and that preferred in the instant invention, is the condensation product of a phenol and an aldehyde, generally referred to as a phenolic resin. In particular, it is preferable to employ an alkaline catalyzed phenol-formaldehyde condensation product as the laminating resin employed in the core layer. These resins can be purchased commercially or prepared according to conventional procedures.

The alpha cellulose sheet used in the print layer of the laminate generally runs from 0.08—0.19 kg/m² (50 to 120 pound basis weight per 3000 square foot ream). Upon this alpha cellulose sheet is displayed a print, pattern or design suitable for the intended use of the laminate. The decorative print, pattern or design is typically applied by a high-speed rotogravure before the sheet is impregnated with the melamine-formaldehyde resin. Recently, photogravure reproductions of natural materials such as wood, marble and leather have been applied to these alpha cellulose sheets as well. Typically, a three-ink system is employed with the alpha cellulose sheet itself being highly pigmented to provide a fourth color as background and as an opaque base by which the core layer is accordingly obscured. Although printing can be accomplished at any time prior to impregnation of the melamine-formaldehyde resin, printing is often done immediately before the impregnation. Printing houses make available, for those laminators not equipped with printing equipment, already printed alpha cellulose paper of various prints, patterns, or designs.

In some applications, abrasive materials have been employed in the overlay in order to improve abrasion resistance. There the abrasive materials are generally deposited upon the alpha cellulose matrix or, in other applications, mixed with cellulosic fibers or microcrystalline materials replacing the alpha cellulose sheet.

Incorporation of these abrasive materials into the overlay often results in severe damage to the delicate, highly polished or intricately etched surfaces of the press plates when the abrasive particles deposited in the overlay come into contact therewith.

To avoid these unwanted problems, the finely divided abrasive materials which lend to the laminate increased abrasion resistance may be incorporated into the alpha cellulose sheet of the present invention in various methods. For example, the abrasive material may be added in the pulper or in the head box during the paper-making process. This method causes uniform distribution of the abrasive particles throughout the sheet, the individual sheet fibers holding the particles through the formation of a matrix network around each particle. Additionally, the abrasive material may be added to the impregnating thermosetting resin. In this latter approach, a thin layer of abrasive particles is deposited on the surface of the opaque alpha cellulose paper during impregnation. In both instances, the abrasive materials become an integral part of the print layer.

Suitable abrasive materials should be clear, highly translucent materials with a refractive index which is substantially identical to that of the thermosetting resin. Such materials include, but are not limited to, silica, silicates, glass fibers, clear asbestos, quartz, corundum, alumina, and other suitable natural or synthetic abrasive materials. Preferably, finely divided silica having particles ranging in size up to 40 $\mu$m with an average size of approximately 5 to 10 $\mu$m are employed. The abrasive material added constitutes approximately 10 to 20 percent by weight of the impregnating melamine-formaldehyde thermosetting resin, preferably about 15 percent by weight of said resin.

Suitable melamine-formaldehyde resins for impregnation of the print layer are prepared by reacting melamine with formaldehyde in an aqueous dispersion or solution. The mole ratio of the melamine to formaldehyde suitably may be varied from 1:1 to 1:3, respectively. It is preferred that the mole ratio be controlled from 1:1.3 to 1:2, melamine to formaldehyde, respectively. The reaction occurs under alkaline conditions at a temperature ranging from about 70°C to the reflux temperature until a clear reaction product is obtained.

The fully hydrolyzed PVA-modified melamine-formaldehyde resin used as a coating over the print layer not only obviates the need for an overlay sheet but provides a high-wear, clear, craze-free decorative laminate that is aesthetically more pleasing. The polyvinyl alcohol is employed as a plasticizer with considerable ductility whose particles in the brittle matrix of the melamine-formaldehyde resin provide for a toughening of the thus-modified resin. The substantially one hundred percent or fully hydrolyzed PVA is required over partially hydrolyzed PVA for use in the melamine-formaldehyde resin because partially hydrolyzed PVA modified melamine-formaldehyde has exhibited too short of a shelf-life (time elapse before gelation) for practical purposes, even when stabilizers such as o,p-toluene sulfonamide have been added. Fully hydrolyzed PVA is commercially available for use in the present invention. The fully hydrolyzed PVA employed in the coating layer generally will not be prepared by hydrolysis of polyvinyl alcohols. Instead, the fully hydrolyzed PVA is the product of fully hydrolyzing a polyvinyl ester, such as polyvinyl acetate or polyvinyl formate. This procedure is more efficient and less costly. However, the term "fully hydrolyzed PVA" is generally recognised in the trade to apply to the fully hydrolyzed polyvinyl ester, and as such will continue to be applied herein.

In preparing the fully hydrolyzed PVA-modified melamine-formaldehyde resin of the present invention, the first stage in the preparation of this coating is the reaction between melamine and formaldehyde. Although the fully hydrolyzed PVA may be added after the reaction of the melamine and formaldehyde forms a clear resin product, it is preferable to add the fully hydrolyzed PVA to the initial stage. The mole ratio of melamine to formaldehyde can be varied from 1:1 to 1:3, respectively. The reaction is to be carried out in an aqueous dispersion or solution. To facilitate this aqueous phase reaction, aqueous formaldehyde solutions commercially available are usually employed in the preparation of the modified resin.

The reaction between melamine and formaldehyde should occur under alkaline conditions. The preferred pH range of the reaction is 7.5 to 10. For this purpose, a buffering material to control the pH is traditionally employed. One such buffering agent that may be advantageously used is triethanolamine, although the present invention is not limited to this particular buffering material. The buffering agent may be employed during the initial stages of the reaction, during both the initial stage and the modification stage, or not at all.

During the initial stage of the melamine-formaldehyde reaction, the reaction temperature is not critical although lower temperatures, such as room temperature, cause the reaction to progress rather slowly. At this point, the fully hydrolyzed PVA may be added to the reaction. The amount of fully hydrolyzed PVA to be employed may vary from 5% to 30% on a weight basis of the total weight of the melamine-formaldehyde reaction product solids. It is generally preferred, however, that the fully hydrolyzed PVA added be in an amount of from about 10% to 20% on a weight basis of the total weight of the melamine-formaldehyde reaction product solids. It is likewise preferred that during the reaction between the fully hydrolyzed PVA and the melamine-formaldehyde resin, a reaction temperature ranging from 70°C to the reflux temperature should be maintained, preferably about 80°C to 90°C. The reaction should continue until the percent water tolerance of the reaction ranges from about 300% to about 1000 in 5°C water. The expression, percent water tolerance, is a well-known term in the resin art and simply means that a sample of resin can be diluted in a certain percent of its volume without displaying any milkiness, i.e. 300% water tolerance at 5°C indicates that the given sample can be diluted in three times its volume of 5°C water without displaying any milkiness. After the reaction product has reached the desired endpoint, it is cooled to ambient temperature and stored for coating use. If the resin product is not viscous enough for coating purposes and penetrates the print paper during subsequent coating operations a small amount of a thickening agent, such as carboxyl methyl cellulose, sodium alginate or the like may be added with the other constituents during the reaction to correct this result. Additionally, stabilizers such as o,p-toluene sulfonamide may be added to extend the shelf-life of the resin coating. To further increase the resin viscosity, a small amount of a catalyst may be added before impregnation or coating operations. The catalyst should not be added earlier, however, because to do so adversely affects the shelf-life of the modified resin so produced.

The fully hydrolyzed PVA modified melamine-formaldehyde resin is coated upon the print layer to a weight of from 60 to 140 grams per square meter, preferably 70 to 120 grams per square meter. The coating operation may be performed by a knife coater, reverse roll coater, or similar technique. The preferred coating process is the knife coater wherein the knife and resin dam are mounted on a roller, adjustment of the gap between the print sheet and the knife coater varies the coating thickness to its desired amount. The coating operation may be a separate operation or part of the impregnation operation. As a separate operation, the print sheet is first impregnated with a melamine-formaldehyde resin and subsequently dried before the coating operation is commenced. As part of the impregnation operation coating is performed on the wet print sheet immediately subsequent to impregnation on a single apparatus. In the present invention a combination of these two methods is preferred wherein the entire impregnation and coating processes are performed on a single apparatus which is provided with the means to impart a partial drying to the wet print sheet subsequent to impregnation yet prior to coating, preferably by passing the impregnated print sheet through a hot air oven before the coating operation. After coating, the print sheet undergoes a terminal drying operation in which the coating print sheet is dried to a volatile content of from about 4% to about 9%, preferably about 6%. The terminal drying imparts upon the coated print sheet the necessary flow characteristics for good bonding to take place in the subsequent heat-pressing operation.

In other applications a three dimensional textured or embossed laminate of registered embossment and color contrast may be desirable. For these applications there is added to the fully hydrolyzed PVA modified melamine-formaldehyde resin any one of, or a combination of, inorganic or organic color pigments, extender pigments, metallic pigments, etc. The amount of pigment added to the resin generally will vary from 0.5% to 20%, based on the total weight of the resin, and dependent upon the pigment used and resultant color contrast desired. Typical inorganic pigments useful include those iron pigments ranging in color from yellow through red, reddish-brown, brown, brown to black. Such iron pigments include yellow ochre, raw and burnt sienna, and raw and burnt umber. Other useful inorganic color pigments include chrome yellow, cadmium sulfide, zinc yellow, cobalt blue, ultramarine blue, iron oxide, chrome green, chromium oxide green, chromium hydroxide green, lamp black, and white pigments such as titanium dioxide, titanium calcium, zinc oxide, zinc sulfide, antimony oxide, lithopone, etc. Although lead pigments may be used, they are preferably avoided because of the safety hazard involved in their use. Organic pigments which may be used include toluidine red, phthalocyanine blue and green, Vandyke brown, alizarin, madder lake, lithol red, and the like.

Useful metallic pigments include aluminum powder, copper powder, bronze powders available in various shades depending upon the alloy composition, zinc powder, gold and gold-like powders, and the like. Any of the pigments, and particularly the metallic pigments, may be used alone or in combination with each other or in combination with other pigments.

To this pigmented fully hydrolyzed PVA modified melamine-formaldehyde resin is added varying amounts of thinners, solvents, fillers, etc so as to vary its viscosities and thereby cause the pigmented material to flow more than the resin in the print layer during the consolidation procedure.

In this embodiment of the present invention, the fully hydrolyzed PVA modified melamine-formaldehyde resin is coated upon the print layer and the embossed laminate assembly to a weight of from 0.54 to 21.5 grams per square meter, preferably 5.38 to 10.76 grams per square meter. The coating operation may be performed by a knife coater, reverse roll coater, or similar technique. The preferred coating process is the knife coater wherein the knife and resin dam are mounted on a roller, adjustment of the gap between the print sheet and the knife coater varies the coating thickness to its desired amount. The coating operation may be a separate operation or part of the impregnation operation. As a separate operation, the print sheet is first impregnated with a melamine-formaldehyde resin and subsequently dried before the coating operation is commenced. As part of the impregnation operation coating is performed on the wet print sheet immediately subsequent to impregnation on a single apparatus. In the present invention a combination of these two methods is preferred wherein the entire impregnation and coating processes are performed on a single apparatus which is provided with the means to impart a partial drying to the wet print sheet subsequent to impregnation yet prior to coating, preferably by passing the impregnated print sheet through a hot air oven before the coating operation. After coating, the print sheet undergoes a terminal drying operation in which the coated print sheet is dried to a volatile content of from about 4% to about 9%, preferably about 6%. The terminal drying imparts upon the coated print sheet the necessary flow characteristics for good bonding to take place in the subsequent heat-pressing operation. At the conclusion of the heat-pressing operation, the surface of the laminate obtained contains an embossment consisting of protuberances and valleys of contrasting color.

A preferred process for manufacturing a high-pressure laminate of the present invention is one in which 3 to 9 core sheets consisting of 0.1524—0.5080 mm kraft paper have been impregnated with a 30% to 60% solution of phenol-formaldehyde resin so that the final resin solids content of the core sheets is 20% to 40% of the total weight of the core. Typically, these core sheets are oven dried after impregnation for a period of about one to two minutes at temperatures ranging from 140°C to 170°C. The print layer, consisting of a 0.08 to 0.19 kg/m$^2$ alpha cellulose sheet optionally displaying a print, pattern, design, or color is impregnated with the melamine-formaldehyde resin so that the final resin solids content of the print sheet is from 10% to 40% of the print sheet, then partially dried, coated on its print bearing side with a fully hydrolyzed PVA-modified melamine-formaldehyde resin and then

5

terminally dried. The sheets are then stacked such that the print sheet is the top most sheet with its print bearing the coated side facing outward. The stacked sheets are placed between polished or textured stainless steel plates upon which there is exerted a pressure of from 5.5—11.0 MPa at temperatures from 120°C to 180°C for approximately 20 minutes to effect the cure and thereby provide the high-pressure laminate. When a three dimensional textured or embossed laminate is to be prepared, the press plate adjacent the print sheet is an embossing press plate, so that application of the heat and pressure thereby effects a lamination of the fibrous sheets together, an embossment of the uppermost surface of the print sheet and a migration of the pigmented resin from the areas of the embossment corresponding to the protuberant areas of the embossed press plate to the valley areas thereof. Thus there is produced a dense laminate having embossed areas of contrasting color. The embossing press plates can be prepared by etching or machining a design on a metal plate. Alternatively, and more preferably, the plate can be prepared as disclosed in US—A—3,718,496. Still further, the raised printed design technique, as taught by Grosheim in US—A—3,373,068 will also work well as an embossing medium in the instant invention. There preferably is exerted upon these plates a pressure of from 5.5—11.0 MPa at temperatures from 120°C to 180°C for approximately 20 minutes to effect the cure embossment and thereby provide the high-pressure laminate.

The embossed areas of the resultant laminate, i.e. those formed from the protuberances of the embossing plate and forming the valleys of the final embossment in the finished laminate surface should preferably be at least 0.18 mm deep. Depths of less than 0.18 mm are possible but not preferred because the color contrast is not as evident. Laminates of muted color differentials can be produced using embossments of these lesser depths however.

A preferred process for manufacturing a low-pressure laminate of the present invention is one in which a pressed particleboard of from 9.525—25.4 mm has stacked above it, in a manner identical to that employed in the high-pressure laminate, the print sheet, this print sheet being idential to the one employed in the high-pressure laminate. The stack is placed between press plates upon which there is exerted a pressure of from 1.3—3.9 MPa at temperatures from 120°C to 180°C for approximately 20 minutes to effect the cure and thereby provide the low-pressure laminate.

The release sheets used in the pressing of laminate of this invention, if necessary, are well known in the art and may be any non-adherable paper or non-adherable aluminum foil. The non-adherable paper may be a parchment type of paper of which a plurality are available commercially. The non-adherable metal foils, as well as the laminate of paper and the non-adherable foils, are also commercially available. Also suitable for this purpose are papers coated, treated or impregnated with polypropylene or the polyfluorocarbons and the like. Films of polypropylene may also be used. Silicone oil treated papers may be used and are also commercially available. Papers coated with sodium alginate and other salts of alginic acid are also suitable for this purpose and are available commercially. When "low pressure" laminates are being formed, no release sheet at all is necessary if the press plate has a releasing surface thereon.

The following specific examples illustrate certain aspects of the present invention and, more particularly, point out methods of evaluating the unique advantages the decorative laminate of the present invention provides. All parts and percentages are by weight unless otherwise specified.

Example 1

Into a suitable reaction vessel equipped with a thermometer, stirrer and reflux condenser there are introduced 221.5 parts of melamine and 256.6 parts of a 37% aqueous solution of formaldehyde. The mixture is adjusted to a pH of 9.0 by the addition of 9.75 parts of triethanolamine. The charge is subjected to constant agitation as it is concurrently heated to 85°C. The temperature is held constant at this point until the resin so produced appears clear. Upon the resin appearing clear there is added 278.9 parts of a 20% solution of fully hydrolyzed polyvinyl alcohol in water. The temperature is maintained at 85°C while water tolerance is constantly monitored in 5°C water. Upon achieving a water tolerance of 500%, the mixture is cooled to room temperature and is ready for laminating use.

Example 2

An alpha-cellulose print paper is impregnated with a conventional melamine-formaldehyde resin to 20% resin solids of the impregnated sheet and immediately thereafter the wet print sheet is coated, by a knife coater, with a layer of the fully hydrolyzed polyvinyl alcohol modified melamine-formaldehyde resin of Example 1. The coating weight of the resinous layer is 70.0 grams per square meter. The coated print paper is dried to a 6.0% volatile content and cut into sheets of suitable size.

Example 3

The procedure of Example 2 is followed in every material detail except that after the print sheet is impregnated with the conventional melamine-formaldehyde resin, it is passed through a hot air oven to effect drying on the impregnated sheet. The dry sheet is then coated with the fully hydrolyzed polyvinyl alcohol modified melamine-formaldehyde resin in accordance with the procedures of Example 2. The coating weight of the resinous layer is 93.0 grams per square meter.

Example 4

The procedure of Example 3 is followed in every material detail except that the fully hydrolyzed polyvinyl alcohol modified melamine-formaldehyde resin of Example 1 has 6.0% of o,p-toluenesulfonamide added to it to improve resin shelf life.

Example 5

The procedure of Example 3 is followed in every material detail except that the fully hydrolyzed polyvinyl alcohol modified melamine-formaldehyde resin of Example 1 has 0.06% of a commercially available wetting agent added to it to prevent a surface "fisheye" appearance.

Example 6

A commercially available kraft paper is impregnated with a conventional phenol-formaldehyde laminating resin to a resin content of 29%. The impregnated paper is then dried to a volatile content of 6.0% and cut into sheets of suitable size. Five such sheets are assembled together to form a core layer.

An alpha cellulose print paper impregnated with a conventional melamine-formaldehyde resin to 40% resin solids is coated following the procedure of Example 3 in every material detail. This coated print paper is then laid upon the laminate core with the coated side facing upwardly. The entire assembly is then pressed between polished stainless steel plates for 21 minutes at 145°C and 9.6 MPa. The pressed laminate is cooled and removed from the press. Test results of the laminate's physical properties are given in Table I.

Example 7

The procedure of Example 6 is followed in every material detail except that the alpha cellulose print paper is impregnated with a conventional melamine-formaldehyde resin to 11% resin solids and thereafter coated following the procedure of Example 3 in every material detail. Test results of the laminate's physical properties are given in Table I.

Example 8

The procedure of Example 7 is followed in every material detail except that the coating weight is 110.0 grams per square meter. Test results of the laminate's physical properties are given in Table I.

Comparative Example A

The procedure of Example 7 is followed in every material detail except that the coating weight is 176.0 grams per square meter. Test results of the laminate's physical properties are given in Table I.

Comparative Example B

A commercially available kraft paper is impregnated with a conventional phenol-formaldehyde laminating resin to a resin content of 29%. The impregnated paper is then dried to a volatile content of 6.0% and cut into sheets of suitable size. Five such sheets are assembled together to form the core layer.

An alpha cellulose print paper impregnated with a conventional melamine-formaldehyde resin to 40% resin solids is laid upon the laminate core layer with the print side facing upward.

A highly refined alpha cellulose overlay paper impregnated with a conventional melamine-formaldehyde resin to a resin content of 60% is then laid upon the print sheet.

The entire assembly is then pressed between polished stainless steel plates for 21 minutes at 145°C and 9.6 MPa. The pressed laminate is cooled and removed from the press. Test results of the laminate's physical properties are given in Table I.

TABLE I

| Test name | Example: Nema Test # | 6 | 7 | 8 | Comparative A | Comparative B |
|---|---|---|---|---|---|---|
| Abrasion wear (grams/100 cycles) | 3—3.01 | 0.060 | 0.056 | 0.054 | 0.044 | 0.072 |
| Abrasion wear (Cycles) | 3—3.01 | 300 | 424 | 484* | 401* | 326 |
| High temperature Resistance | 3—3.06 | NE | NE | NE | Severe Cracking | NE |
| Boiling water Resistance | 3—3.05 | NE | NE | NE | NE | NE |
| Cigarette resistance (seconds) | | 153 | 136 | 179 | 164 | 182 |
| Impact resistance (metres) | 3—3.03 | 2.01 | 2.03 | 1.5 | 1.57 | 1.98 |
| Stain resistance | 3—3.09 | NE | NE | NE | NE | NE |
| Cleanability | 3—3.12 | NE | NE | NE | NE | NE |
| Dimensional change (%) | 3—3.04 | — | — | — | 0.239 MD 0.628 CD | 0.155 MD 0.425 CD |
| Steam resistance | — | | — | NE after 24 hours | — | Crack after 5 hours | NE after 24 hours |

*Non-uniform surface wear due to thick coating warping the laminate
NE: No Effect
MD: Machine Direction
CD: Cross Direction

Example 9

When the procedure of Example 9 is followed in every material detail except that the print sheet is coated according to Example 4, substantially equivalent results are obtained.

Example 10

When the procedure of Example 7 is followed in every material detail except that the print sheet is coated according to Example 5, substantially equivalent results are obtained.

Example 11

When the procedure of Example 7 is followed in every material detail except that the coating weight is 135.0 grams per square meter substantially equivalent results are obtained.

Example 12

When the procedure of Example 7 is followed in every material detail except that the fully hydrolyzed PVA constitutes 5% by weight of the total weight of the melamine-formaldehyde reaction product solids substantially equivalent results are obtained.

Example 13

When the procedure of Example 7 is followed in every material detail except that the fully hydrolyzed PVA constitutes 25% by weight of the total weight of the melamine-formaldehyde reaction product solids substantially equivalent results are obtained.

Examples 14—21

When the procedures of Examples 6—13 are followed in every material detail, except that a 12.7 mm pressed particleboard constitutes the core layer and the pressure and temperature are 2.0 MPa and 145°C respectively, substantially equivalent results are obtained for a low-pressure laminate.

Comparative Example C

A commercially available kraft paper is impregnated with a conventional phenol-formaldehyde laminating resin to a resin content of 29%. The impregnated paper is then dried to a volatile content of 6.0% and cut into sheets of suitable size. Five such sheets are assembled together to form the core layer.

An alpha cellulose print paper is impregnated with a conventional melamine-formaldehyde resin to 20% resin solids of the impregnated sheet and immediately thereafter the wet print sheet is coated, by a knife coater, with a layer of conventional melamine-formaldehyde resin. The coating weight of the resinous layer is 93.0 grams per square meter. The coated print paper is dried to a 6.0% volatile content and cut into a sheet of suitable size which is laid upon the laminate core layer with the print size facing upward.

The entire assembly is then pressed between polished stainless steel plates for 21 minutes at 145°C and 9.6 MPa. The pressed laminate is cooled and removed from the press. Comparative test results of the laminate's crack/craze resistance are given in Table II.

TABLE II

| | Exam. 6 | Exam. 7 | Exam. 8 | Comp. Exam. B | Comp. Exam. C |
|---|---|---|---|---|---|
| Crack/craze resistance (at low relative humidity exposure) | NE | NE | NE | NE | Extreme cracking and craze |

Test results indicate that a melamine-formaldehyde resin coating without a cellulose or synthetic reinforcement produces poor crack and craze resistant properties.

Comparative Example D

Partially (88%) hydrolyzed polyvinyl alcohol modified melamine-formaldehyde resins prepared according to the procedure of the British Patent No. 855,536 were employed as the coating layer in a no-overlay laminate similar to the one prepared in Example 6, above, and tested for color tint and flexural strength. Test results are give in Tables III and IV.

Example 22

Fully hydrolyzed polyvinyl alcohol modified melamine-formaldehyde resins, prepared according to the procedure set forth in Example 1, were employed as the coating layer in a no-overlay laminate similar to the one prepared in Example 6, above, and tested in comparison with the laminates of Comparative Examples D for color tint and flexural strength. Test results are given in Tables III and IV.

TABLE III
Color tint: Yellowness index

| Example | M/F ratio | % Hydrolysis | % PVA | YI/t $(10^3)$* |
|---|---|---|---|---|
| **Control | 1:2.0 | —— | 0 | 12 |
| Comp. D | 1:2.0 | 88% | 30% | 69—79 |
| 22 | 1:2.0 | 100% | 30% | 61 |

*YI/t: Yellowness Index as measured for overlay-free high pressure laminates divided by the thickness (t) of the resin layer covering a white decorative alpha-cellulose print sheet.
**Control: An unmodified melamine-formaldehyde overlay-free high pressure laminate.

The above data indicate that while laminates prepared employing partially hydrolyzed polyvinyl alcohol modified melamine-formaldehyde resins display a strong yellow tint, those laminates prepared with the fully hydrolyzed polyvinyl alcohol modified melamine-formaldehyde resin are substantially less yellow in tint.

TABLE IV
Flexural strength

| Example | M/F ratio | % Hydrolysis | % PVA | Flexural strength* (MPa) |
|---|---|---|---|---|
| Comp. D | 1:2.0 | 88% | 30% | 108 |
| 22 | 1:2.0 | 100% | 30% | 154 |
| Comp. D | 1:2.5 | 88% | 30% | 130 |
| 22 | 1:2.5 | 100% | 30% | 139 |

*Average value for several measurements made with the print side in tension

The above data indicates that the laminates employing fully hydrolyzed polyvinyl alcohol modified melamine-formaldehyde resins are superior in strength properties to those prepared using the partially hydrolyzed resin as a coating layer.

### Example 23

Into a suitable reaction vessel equipped with a thermometer, stirrer and reflux condenser there are introduced 568 parts of melamine and 658 parts of a 37% aqueous solution of formaldehyde. The mixture is adjusted to a pH of 9.0 by the addition of 25 parts of triethanolamine. The charge is subjected to constant agitation as it is concurrently heated to 85°C. The temperature is held constant at this point until the resin so produced appears clear. Upon the resin appearing clear there is added 715 parts of a 20% solution of fully hydrolyzed polyvinyl alcohol in water. The temperature is maintained at 85°C. while water tolerance is constantly monitored in 5°C water. Upon achieving a water tolerance of 500%, the mixture is cooled to room temperature and is ready for laminating use. Observations are given in Table V.

### Example 24

The procedure of Example 23 is followed in every material detail except that the fully hydrolyzed polyvinyl alcohol is added at the initial stage along with the melamine and formaldehyde. Observations are given in Table V.

### Example 25

The procedure of Example 23 is followed in every material detail except that the melamine-formaldehyde resin is allowed to react at room temperature until it is clear. Observations are given in Table V.

### Example 26

The procedure of Example 23 is followed in every material detail except that the magnitudes of the resin constituents are as follows: 504 parts of melamine, 871 parts of a 37% aqueous solution of formaldehyde, 32 parts of triethanolamine and enough water to bring the total solids content to 50%. Observations are given in Table V.

### Comparative Example E

The procedure of Example 23 is followed in every material detail except that a partially hydrolyzed polyvinyl alcohol is used in place of the fully hydrolyzed polyvinyl alcohol. Percent hydrolysis was 85.5—88.7%. Observations are given in Table VI.

TABLE V

| Example | pH | Shelf-life* |
|---|---|---|
| 23 | 9.0 | 14 days |
| 24 | 9.2 | 10 days |
| 25 | 9.0 | 14 days |
| 26 | 9.0 | 14 days |

*Time lapse before gelation

### Example 27

An alpha-cellulose print paper is impregnated with a conventional melamine-formaldehyde resin to 20% resin solids of the impregnated sheet and thereafter the print sheet is coated with a layer of the fully hydrolyzed polyvinyl alcohol modified melamine-formaldehyde resin of Example 23. The coated print paper is dried to a 6.0% volatile content and cut into sheets of suitable size.

### Example 28

The procedure of Example 27 is followed in every material detail except that the fully hydrolyzed polyvinyl alcohol modified melamine-formaldehyde resin of Example 23 has 0.06% of a commercially available surfactant added to it to prevent a surface "fisheye" appearance.

### Example 29

A commercially available kraft paper is impregnated with a conventional phenol-formaldehyde laminating resin content of 29%. The impregnated paper is then dried to a volatile content of 6.0% and cut into sheets of suitable size. Five such sheets are assembled together to form a core layer.

An alpha cellulose print paper impregnated with a conventional melamine-formaldehyde resin to 40% resin solids is coated following the procedure of Example 27 in every material detail. This coated print paper is then laid upon the laminate core with the coated side facing upwardly. The entire assembly is then pressed between polished stainless steel plates for 21 minutes at 145°C. and 9.6 MPa. The pressed laminate is cooled and removed from the press. The resultant laminate meets the requirements of NEMA for high-pressure decorative laminates.

Examples 30—32

The procedure of Example 29 is followed in every material detail in each instance, except that the coating resin used was that produced in Examples 24—26, respectively. The resultant laminates meet the requirements of NEMA for high-pressure decorative laminates.

Examples 33—36

The procedure of Example 29 is followed in every material detail, in each instance, except that the alpha-cellulose print paper is coated following the procedure of Example 28 and that the coating resin used was that produced in Examples 24—26, respectively. The resultant laminates meet the requirements of NEMA for high-pressure decorative laminates.

Comparative Example F

A commercially available kraft paper is impregnated with a conventional phenol-formaldehyde laminating resin to a resin content of 29%. The impregnated paper is then dried to a volatile content of 6.0 and cut into sheets of suitable size. Five such sheets are assembled together to form a core layer.

An opaque alpha cellulose print paper is impregnated with a conventional melamine-formaldehyde resin to 40% resin solids. The print paper is then passed through a hot-air oven to effect drying of the impregnated sheet. The dry print sheet is then coated with a fully hydrolyzed PVA modified melamine-formaldehyde resin by a knife coater. The coating weight of the resinous layer is 88 grams per square meter. The coated print paper is dried to a 6.0% volatile content and cut into sheets of suitable size.

This coated print paper is then laid upon the laminate core with the coated side facing upwardly. The entire assembly is then pressed between polished stainless steel plates at 145°C and 9.6 MPa. The pressed laminate is cooled and removed from the press. Test results of the laminate's physical properties are given in Table VI.

Example 37

The procedure of Comparative Example F is followed in every material detail except that finely divided silica of 325 mesh (0.044 mm) is added to the melamine-formaldehyde resin before impregnating the print layer. The silica constitutes 15% by weight of the melamine-formaldehyde resin. Test results of the laminate's physical properties are given in Table VI.

Comparative Example G

The procedure of Comparative Example F is followed in every material detail except that immediately after the print layer is impregnated with the conventional melamine-formaldehyde resin it is coated, by a knife coater, with a layer of the fully hydrolyzed PVA modified melamine-formaldehyde resin, no prior drying having been effectuated. Test results of the laminate's physical properties are given in Table VI.

Example 38

The procedure of Comparative Example G is followed in every material detail except that finely divided silica of 325 mesh (0.044 mm) is added to the melamine-formaldehyde resin impregnating the print layer. The silica constitutes 15% by weight of the melamine-formaldehyde resin. Test results are given in Table VI.

Example 39

The procedure of Comparative Example F is followed in every material detail except that the opaque alpha cellulose print paper contains silica particles. The silica particles of 325 mesh (0.044 mm) are added to the paper during the manufacturing processes so that the cellulose fibers entrap the silica particles. The amount of silica is such that it equals 15% by weight of the melamine-formaldehyde resin which is later impregnated into the print layer. Additionally, the print layer is impregnated with conventional melamine-formaldehyde to 48% resin solids. Test results are given in Table VI.

TABLE VI
Abrasion resistance

| Example | NEMA test #3—301 Abrasion wear: cycles | NEMA test #3—301 Abrasion wear: gram/100 cycles |
|---|---|---|
| Comparative E | 350 | 0.07 |
| 37* | 527 | 0.032 |
| Comparative F | 350 | 0.07 |
| 38* | 443 | 0.04 |
| 39* | 600 | 0.012 |

*No evidence of plate scratching despite presence of silica particles.

11

Example 40

When the procedure of Example 37 is followed in every material detail except that calcium silicate is employed as the abrasive material in an amount equal to 10% by weight of the melamine-formaldehyde resin, substantially equivalent results are obtained.

Example 41

When the procedure of Example 37 is followed in every material detail except that glass fibers are employed as the abrasive material in an amount equal to 20% by weight of the melamine-formaldehyde resin, substantially equivalent results are obtained.

Example 42

When the procedure of Example 37 is followed in every material detail except that alumina is employed as the abrasive material in an amount equal to 15% by weight of the melamine-formaldehyde resin, substantially equivalent results are obtained.

Examples 43—48

When the procedure of Examples 37—42 are followed in every material detail except that a 12.7 mm pressed particleboard constitutes the core layer and the pressing pressure and temperature are 2.0 MPa and 145°C respectively, a low-pressure laminate of excellent surface abrasion resistance is obtained.

Example 49
Part A

A pigmented fully hydrolyzed PVA-modified melamine-formaldehyde resin is prepared by reacting melamine and formaldehyde together in a mole ratio of 1:1.8, respectively. The resin is modified with 10% fully hydrolyzed PVA on a weight basis of the total weight of the melamine-formaldehyde reaction product solids and pigmented with 0.5% brown iron-oxide, same basis.

Part B

An alpha cellulose print sheet exhibiting a tawny rawhide design with a basis weight of 0.08 kg/m² is first impregnated with a conventional melamine-formaldehyde resin so that the final resin solids content is 29% of the print sheet. The impregnated sheet is then partially dried by passing through a hot air oven and then coated, on its print bearing side, with the pigmented PVA-modified resin of Part A. The pigmented PVA-modified resin of Part A has flow sufficiently great enough to cause said pigmented resin to flow more than the conventional melamine-formaldehyde resin impregnated print layer. The coating is applied by a knife coater adjusted to place a coating weight of 0.064 kg/m² upon the print sheet. The coated sheet is then terminally dried to a 4% volatile content and 16% resin flow.

Part C

Six phenolic impregnated kraft paper sheets having a basis weight of 0.19 kg/m² ream are stacked together. Each kraft sheet is impregnated so that the final resin solids content is 27% of the kraft sheet. The coated print sheet is next placed upon the six assembled kraft sheets such that the print bearing, coated side faces upward. Upon the print sheet is placed a release sheet and a textured leather embossing master plate. This assembly is pressed at 9.6 MPa at 145°C for 20 minutes, cooled, trimmed and sanded.

The resulting laminate gives a leather-like appearance displaying variations in color intensity-high pressure areas being lighter and low pressure areas being darker.

Example 50

The procedure of Example 49 is followed in every material detail except that the amount of fully hydrolyzed PVA employed in Part A is 30%, the amount of pigment employed is 18%, the pigment employed is Vandyke brown, the coating weight in Part B is 0.017 kg/m², and the embossing master employed in Part C is an open weave textured plate. The resulting laminate is a brown open weave embossed sheet having excellent physical and chemical properties.

Example 51

The procedure of Example 49 is followed in every material detail except that the amount of fully hydrolyzed PVA employed in Part A is 20%, the amount of pigment employed is 6%, the pigment employed is lamp black, the coating weight in Part B is 0.11 kg/m², and the embossing master employed in Part C is a slate textured plate. The resulting laminate is a black slate embossed sheet exhibiting excellent physical and chemical properties.

Example 52

The procedure of Example 49 is followed in every material detail except that the amount of fully hydrolyzed PVA employed in Part A is 5%, the amount of pigment employed is 1%, the pigment employed is titanium dioxide, the coating weight in Part B is 0.1937 kg/m², and the embossing master employed in Part C is a tile textured plate. The resulting laminate is a white tile embossed sheet exhibiting excellent physical and chemical properties.

Examples 53—56

When the procedure of Examples 49—52 is followed in every material detail except that a 12.7 mm pressed particleboard constitutes the core layer and the pressure and temperature are 2.0 MPa and 145°C, respectively, substantially equivalent results are obtained for a low-pressure laminate.

**Claims**

1. A heat and pressure consolidated laminate comprising, in superimposed relationship,

(a) a core layer consisting of a self-supporting substrate;
(b) a print layer consisting of an opaque alpha cellulose paper sheet impregnated with a melamine-formaldehyde thermoset resin, and
(c) a surface coating of a fully hydrolyzed polyvinyl alcohol-modified melamine-formaldehyde resin, wherein the surface coating weight is from 60 to 140 grams per square meter, the modified melamine-formaldehyde resin comprises the reaction product of melamine and formaldehyde in a molar ratio in the range from 1:1 to 1:3, respectively, and the amount of fully hydrolyzed polyvinyl alcohol in the surface coating is from 5 to 30 percent by weight of the total weight of the melamine-formaldehyde reaction product solids.

2. A heat-and-pressure consolidated laminate of registered embossment and color contrast comprising, in superimposed relationship,

(a) a core layer comprised of a self-supporting substrate;
(b) a print layer consisting of an alpha cellulose paper sheet impregnated with a melamine-formaldehyde thermoset resin; and
(c) a pigmented surface coating of a fully hydrolyzed polyvinyl alcohol modified melamine-formaldehyde resin, wherein the surface coating weight is from 0.54 to 21.5 grams per square meter, the modified melamine-formaldehyde resin comprises the reaction product of melamine and formaldehyde in a molar ratio in the range from 1:1 to 1:3, respectively, the amount of fully hydrolyzed polyvinyl alcohol in the surface coating is from 5 to 30 percent by weight of the melamine-formaldehyde reaction product solids and the pigmented surface coating has a flow sufficient to cause said pigmented surface coating to flow more than said resin impregnating the print layer; and the surface of said laminate contains an embossment consisting of protuberances and valleys of contrasting color.

3. The laminate of Claim 1 or Claim 2, wherein the core layer comprises a plurality of cellulosic sheets impregnated with a thermoset resin.

4. The laminate of Claim 3, wherein the core layer comprises a plurality of kraft paper sheets impregnated with a thermoset resin.

5. The laminate of Claim 3 or Claim 4, wherein the thermoset resin in the core layer is an alkaline catalyzed phenol-formaldehyde condensation product.

6. The laminate of any preceding claim, wherein the melamine-formaldehyde resin impregnating the print layer is the product of reacting melamine with formaldehyde wherein the mole ratio of melamine to formaldehyde is from 1:1 to 1:3, respectively.

7. The laminate of any preceding claim, wherein the print layer contains finely divided abrasive materials.

8. The laminate of Claim 7, wherein the finely divided abrasive material is silica.

9. The laminate of any preceding claim, wherein the amount of formaldehyde employed in the surface coating resin is from 1.3 to 2.0 moles per mole of melamine employed.

10. The laminate of any preceding claim, wherein the amount of polyvinyl alcohol employed is in the range of from 10 to 20 percent by weight of the total weight of the melamine formaldehyde reaction product solids.

11. The laminate of Claim 1, or of any one of Claims 3—10 when appendant to Claim 1, wherein the fully hydrolyzed polyvinyl alcohol modified melamine-formaldehyde surface coating weight is from 70 to 120 grams per square meter.

12. The laminate of Claim 2, or of any one of Claims 3—10 when appendant to Claim 2, wherein the fully hydrolyzed PVA modified melamine-formaldehyde surface coating weight is from 5.38 to 10.76 grams per square meter.

13. The laminate of Claim 2, or of any one of Claims 3—10 and 12 when appendant to Claim 2, wherein the amount of pigment added to the surface coating resin is from 0.5 to 20.0 percent by weight of the total weight of the melamine-formaldehyde reaction product solids.

14. A method of producing a heat and pressure consolidated laminate of Claim 1, which comprises:

(a) positioning a laminate assembly between polished stainless steel press plates wherein said laminate assembly comprises, in super-imposed relationship,

(1) said core layer,
(2) said print layer, and
(3) said surface coating;

(b) applying sufficient temperature and pressure to the laminate assembly to cure the resins impregnating the laminate assembly, thereby providing the laminate; and

(c) recovering the resultant laminate.

15. The method of Claim 14, wherein the print layer contains finely divided abrasive materials.

16. The method of Claim 14 or Claim 15, wherein the press plates have a polished finish.

17. The method of Claim 14 or Claim 15, wherein the press plates have a textured finish.

18. A method of producing a heat-and-pressure consolidated laminate of Claim 2, which comprises consolidating a laminate assembly under sufficient heat and pressure wherein said laminate assembly comprises, in superimposed relationship,

(a) said core layer;
(b) said resin impregnated print layer;
(c) said pigmented surface coating; and
(d) an embossing press plate having a surface with protuberant and valley areas capable of being impressed into the uppermost surface of said print layer and means for preventing the embossing press plate from sticking to the coated print sheet during lamination, to thereby effect a lamination of said fibrous sheets together, an embossment of the uppermost surface of the print sheet and a migration of the pigmented resin from the areas of said embossment corresponding to the protuberant areas of the embossed press plate to the valley areas thereof and thereafter removing said embossing press plate from the resultant laminate so as to produce a dense laminate having embossed areas of contrasting color.

## Patentansprüche

1. Ein durch Hitze und Druck verfestigtes Laminat, umfassend in übereinanderliegender Beziehung

a) eine Kernschicht, bestehend aus einem selbsttragenden Substrat;
b) eine Druckschicht, bestehend aus einem opaken Alpha-Zellulose-Papierblatt, imprägniert mit einem Melamin-Formaldehydwärmehärtenden Harz, und
c) eine Oberflächenbeschichtung aus einem vollständig hydrolisierten Polyvinylalkohol-modifizierten Melamin-Formaldehydharz, wobei das Gewicht der Oberflächenbeschichtung von 60 bis 140 Gramm pro Quadratmeter beträgt, das modifizierte Melamin-Formaldehydharz das Reaktionsprodukt von Melamin und Formaldehyd in einem Mol-Verhältnis im Bereich von 1:1 bis 1:3 umfaßt und die Menge des vollständig hydrolisierten Polyvinylalkohols in der Oberflächenbeschichtung von 5 bis 30 Gew.-%, bezogen auf das Gesamtgewicht der Melamin-Formaldehyd-Reaktionsproduktfeststoffe, beträgt.

2. Ein durch Hitze und Druck verfestigtes Laminat mit aufeinander abgestimmter Prägung und Farbkontrast, umfassend in übereinanderliegender Beziehung

a) eine Kernschicht, umfassend eine selbsttragendes Substrat;
b) eine Druckschicht, bestehend aus einem Alpha-Zellulose-Papierblatt, imprägniert mit einem Melamin-Formaldehydwärmehärtenden Harz; und
c) eine pigmentierte Oberflächenbeschichtung aus einem vollständig hydrolisierten Polyvinylalkohol-modifizierten Melamin-Formaldehydharz, wobei das Gewicht der Oberflächenbeschichtung von 0,54 bis 21,5 Gramm pro Quadratmeter berägt, das modifizierte Melamin-Formaldehydharz das Reaktionsprodukt von Melamin und Formaldehyd in einem Mol-Verhältnis im Bereich von 1:1 bis 1:3 umfaßt, die Menge des vollständig hydrolisierten Polyvinylalkohols in der Oberflächenbeschichtung von 5 bis 30 Gew.-%, bezogen auf die Melamin-Formaldehyd-Reaktionsprodukt-Feststoffe, beträgt und die pigmentierte Oberflächenbeschichtung eine Fließfähigkeit aufweist, die ausreicht, damit die pigmentierte Oberflächenbeschichtung mehr fließt als das Harz, mit dem die Druckschicht imprägniert ist; und wobei die Oberfläche des Laminats eine Prägung enthält, bestehend aus erhabenen Bereichen und Tälern mit kontrastierender Farbgebung.

**0 021 588**

3. Laminat gemäß Anspruch 1 oder Anspruch 2, wobei die Kernschicht eine Vielzahl von zelluloseartigen, mit einem wärmehärtenden Harz imprägnierten Blättern umfaßt.

4. Laminat nach Anspruch 3, wobei die Kernschicht eine Vielzahl von mit einem wärmehärtenden Harz imprägnierten Kraft-Papierblättern umfaßt.

5. Laminat nach Anspruch 3 oder Anspruch 4, wobei das wärmehärtende Harz in der Kernschicht ein alkalisch katalysiertes Phenol-Formaldehyd-Kondensationsprodukt ist.

6. Laminat nach irgendeinem der vorstehenden Ansprüche, wobei das Melamin-Formaldehydharz, mit dem die Druckschicht imprägniert ist, ein Produkt der Umsetzung von Melamin mit Formaldehyd ist, wobei das Mol-Verhältnis von Melamin zu Formaldehyd von 1:1 bis 1:3 betragt.

7. Laminat nach irgendeinem der vorstehenden Ansprüche, wobei die Druckschicht fein zerteilte Abriebmaterialien enthält.

8. Laminat nach Anspruch 7, wobei das fein zerteilter Abriebmaterial Siliziumdioxid ist.

9. Laminat nach irgendeinem der vorstehenden Ansprüche, wobei die Menge des in dem Oberflächenbeschichtungsharz eingesetzten Formaldehyd von 1,3 bis 2,0 Mol pro Mol des eingesetzten Melamins beträgt.

10. Laminat nach irgendeinem der vorstehenden Ansprüche, wobei die Menge des eingesetzten Polyvinylalkohols im Bereich von 10 bis 20 Gew.-%, bezogen auf das Gesamtgewicht der Melamin-Formaldehyd-Reaktionsproduktfeststoffe, beträgt.

11. Laminat nach Anspruch 1 oder einem der Ansprüche 3 bis 10, falls diese auf Anspruch 1 rückbezogen sind, wobei das Gewicht der mit vollständig hydrolisiertem Polyvinylalkohol modifizierten Melamin-Formaldehyd-Oberflächenbeschichtung von 70 bis 120 Gramm pro Quadratmeter beträgt.

12. Laminat nach Anspruch 2 oder nach einem der Ansprüche 3 bis 10, falls diese auf Anspruch 2 zurückbezogen sind, wobei das Gewicht der mit vollständig hydrolisiertem PVA modifizierten Melamin-Formaldehyd-Oberflächenbeschichtung von 5,38 bis 10,76 Gramm pro Quadratmeter beträgt.

13. Laminat nach Anspruch 2 oder nach einem der Ansprüche 3 bis 10 und 12, falls diese auf Anspruch 2 zurückbezogen sind, wobei die Menge des dem Oberflächenbeschichtungsharz zugesetzten Pigments von 0,5 bis 20,0 Gew.-%, bezogen auf das Gesamtgewicht der Melamin-Formaldehyd-Reaktionsproduktfeststoffe, beträgt.

14. Verfahren zur Herstellung eines durch Hitze und Druck verfestigten Laminats gemäß Anspruch 1, umfassend:

a) die Positionierung einer Laminatanordnung zwischen polierten Edelstahl-Druckplatten, wobei die Laminatanordnung in übereinanderliegender Beziehung

(1) die Kernschicht,
(2) die Druckschicht und
(3) die Oberflächenbeschichtung umfaßt;

b) die Beaufschlagung der Laminatanordnung mit ausreichender Temperatur und ausreichendem Druck, um die Harze, mit der die Laminatanordnung imprägniert ist, zu härten und auf diese Weise das Laminat zu schaffen; und
c) die Entnahme des resultierenden Laminats.

15. Verfahren nach Anspruch 14, wobei die Druckschicht fein zerteilte Abriebmaterialien enthält.

16. Verfahren nach Anspruch 14 oder Anspruch 15, wobei die Druckplatten ein poliertes Finish haben.

17. Verfahren nach Anspruch 14 oder Anspruch 15, wobei die Druckplatten ein texturiertes Finish haben.

18. Verfahren zur Herstellung eines durch Hitze und Druck verfestigten Laminats gemäß Anspruch 2, umfassend die Verfestigung einer Laminatanordnung unter ausreichender Hitze und ausreichendem Druck, wobei die Laminatanordnung in übereinanderliegender Beziehung

a) die Kernschicht;
b) die mit Harz imprägnierte Druckschicht;
c) die pigmentierte Oberflächenbeschichtung und
d) eine prägende Druckplatte umfaßt, welche eine Oberfläche mit vorspringenden und vertieften Bereich aufweist, die sich in die oberste Oberfläche der Druckschicht eindrücken lassen, sowie Mittel zur Verhinderung des Anhaftens der prägenden Druckplatte an das beschichtete Druckblatt während der Laminierung, um auf diese Weise eine Laminierung der faserartigen Blätter zu bewirken, sowie eine Prägung der obersten Oberfläche des Druckblattes und eine Wanderung des pigmentierten Harzes von den Bereichen, welche bei der Prägung den vorspringenden Bereichen der prägenden Druckplatte entsprechen zu den vertieften Bereichen derselben hin und anschließende Entfernung der prägenden Druckplatte von dem resultierenden Laminat unter Schaffung eines dichten Laminats, welches geprägte Bereiche mit kontrastierender Farbgebung aufweist.

15

**O O21 588**

## Revendications

1. Un stratifié fusionné à chaud et sous pression comprenant, en superposition,

(a) une couche d'âme constituée d'un substrat autoportant
(b) une couche imprimée constituée d'une feuille opaque de papier d'$\alpha$-cellulose imprégnée d'une résine mélamine-formaldéhyde thermodurcie, et
(c) un revêtement superficiel d'une résine mélamine-formaldéhyde modifiée par un alcool polyvinylique entièrement hydrolysé, où le poids du revêtement superficiel est de 60 à 140 g/m$^2$, la resine mélamine-formaldéhyde modifiée est constituée du produit de la réaction de la mélamine et du formaldéhyde dans un rapport molaire respectif dans la gamme de 1/1 à 1/3, et la quantité de l'alcool polyvinylique entièrement hydrolysé dans le revêtement superficiel est de 5 à 30% en poids par rapport au poids total des matières sèches du produit de la réaction mélamine-formaldéhyde.

2. Un stratifié fusionné par la chaleur et la pression comportant un graufrage et une couleur contrastante en coïncidence, comprenant, en superposition,

(a) une couche d'âme constituée d'un substrat autoportant
(b) une couche d'impression constituée d'une feuille de papier d'$\alpha$-cellulose imprégnée d'une résine mélamine-formaldéhyde thermodurcie; et
(c) un revêtement superficiel pigmenté d'une résine mélamine-formaldéhyde modifiée par un alcool polyvinylique entièrement hydrolysé, où le poids du revêtement superficiel est de 0,54 à 21,5 g/m$^2$, la résine mélamine-formaldéhyde modifiée est constituée du produit de la réaction de la mélamine et du formaldéhyde dans un rapport molaire respectif dans la gamme de 1/1 à 1/3, la quantité de l'alcool polyvinylique entièrement hydrolysé dans le revêtement superficiel est de 5 à 30% en poids par rapport aux matières sèches du produit de la réaction mélamine-formaldéhyde, et le revêtement superficiel pigmenté a une fluidité suffisante pour que ledit revêtement superficiel pigmenté coule plus que ladite résine imprégnant la couche d'impression; et la surface dudit stratifié comprend un gaufrage constitué de protubérances et de vallées de couleur contrastante.

3. Le stratifié de la revendication 1 ou de la revendication 2, où la couche d'âme comprend plusieurs feuilles cellulosiques imprégnées d'une résine thermodurcie.
4. Le stratifié de la revendication 3, où la couche d'âme comprend plusieurs feuilles de papier kraft imprégnées d'une résine thermodurcie.
5. Le stratifié de la revendication 3 ou de la revendication 4, où le résine thermodurcie dans la couche d'âme est un produit de la condensation phénol-formaldéhyde effectuée avec catalyse alcaline.
6. Le stratifié de l'une quelconque des revendications précédentes, où la résine mélamine-formaldéhyde imprégnant la couche d'impression est le produit de la réaction de la mélamine avec le formaldéhyde dans un rapport molaire respectif de la mélamine au formaldéhyde de 1/1 à 1/3.
7. Le stratifié de l'une quelconque des revendications précédentes, où la couche d'impression contient des matières abrasives finement divisées.
8. Le stratifié de la revendication 7, où la matière abrasive finement divisée est la silice.
9. Le stratifié de l'une quelconque des revendications précédentes, où la quantité de formaldéhyde employée dans la résine de revêtement superficiel est de 1,3 à 2,0 moles par mole de mélamine employée.
10. Le stratifié de l'une quelconque des revendications précédentes, où la quantité d'alcool polyvinylique employée est dans la gamme de 10 à 20% en poids par rapport au poids total des matières seches du produit de la réaction mélamine-formaldéhyde.
11. Le stratifié de la revendication 1 ou de l'une quelconque des revendications 3 à 10, lorsqu'elles dépendent de la revendication 1, où le poids du revêtement superficiel de mélamine-formalde modifié par le l'alcool polyvinylique entièrement hydrolysé est de 70 à 120 g/m$^2$.
12. Le stratifié de la revendication 2 ou de l'une quelconque des revendications 3 à 10, lorsqu'elles dépendent de la revendication 2, où le poids du revêtement superficiel de mélamine-formaldéhyde modifié par du PVA entièrement hydrolysé est de 5,38 à 10,76 g/m$^2$.
13. Le stratifié de la revendication 2 ou de l'une quelconque des revendications 3 à 10 et 12, lorsqu'elles dépendent de la revendication 2, où la quantité de pigment ajoutée à la résine de revêtement superficiel est de 0,5 à 20,0% en poids par rapport au poids total des matières sèches du produit de la réaction mélamine-formaldéhyde.
14. Un procédé de préparation d'un stratifié fusionné par la chaleur et la pression de la revendication 1, qui comprend:

(a) la mise en place d'un ensemble stratifié entre des plaques de presse en acier inoxydable polies, ledit ensemble stratifié comprenant, en superposition,

(1) ladite couche d'âme,
(2) ladite couche d'impression, et
(3) ledit revêtement superficiel;

(b) l'application à l'ensemble stratifié d'une température et d'une pression suffisantes pour durcir les résines imprégnant l'ensemble stratifié et former ainsi le stratifie; et
(c) la récupération de stratifié obtenu.

15. Le procédé de la revendication 14, dans lequel la couche d'impression contient des matières abrasives finement divisées.

16. Le procédé de la revendication 14 ou de la revendication 15, où les plaques de presse ont une surface polie.

17. Le procédé de la revendication 14 ou de la revendication 15, où les plaques de presse ont une surface texturée.

18. Un procédé de préparation d'un stratifié fusionné par la chaleur et la pression de la revendication 2, qui comprend la fusionnement d'un ensemble stratifié avec application d'une chaleur et d'une pression suffisantes, où ledit ensemble stratifié comprend, en superposition,

(a) ladite couche d'âme;
(b) ladite couche d'impression imprégnée de résine;
(c) ledit revêtement superficiel pigmenté; et
(d) une plaque de presse de gaufrage ayant une surface avec des zones protubérantes et des zones de vallées pouvant être imprimée dans la surface supérieure de ladite couche d'impression et un dispositif pour empêcher que la plaque de presse de gaufrage colle à la feuille d'impression revêtue pendant la stratification, pour effectuer ainsi une stratification mutuelle desdites feuilles fibreuses, un gaufrage de la surface supérieure de la feuille d'impression et une migration de la résine pigmentée à partir des zones dudit gaufrage correspondant aux zones de protubérances de la plaque de presse gaufrée à ses zones de vallées, puis la séparation de ladite plaque de presse de gaufrage du stratifi obtenu de façon à produire un stratifié dense ayant des zones gaufrée de couleur contrastante.